# EUROPEAN PATENT APPLICATION

(11) **EP 2 487 919 A2**
(43) Date of publication of application: **15.08.2012**
(21) Application number: 12163713.6
(22) Date of filing: 01.10.2007
(51) Int. Cl.: H04N 21/2665, H04N 21/2662, H04N 21/2343, H04N 21/6373, H04N 7/26, H04N 7/50

(54) **Method for providing media content to a client device, system and computer software**

(30) Priority: 29.09.2006 NL 1032594; 04.06.2007 NL 1033929; 10.09.2007 NL 1034357
(62) Divisional of application: 07834561.8
(71) Applicant: Avinity Systems B.V., 1217 GP Hilversum (NL)
(72) Inventor: Brockmann, Ronald, 3572 BL - Utrecht (NL)
(74) Representative: Ehlers, Jochen

(57) **Abstract**

The present invention provides a method for providing media content to a requesting client device, system and computer software, in which the method comprises steps for:- downloading and transcoding media content associated with an application in a transcoding server into a protocol decodeable by the client device, - receiving a request from the client device for specific media content, - integrating the specific transcoded media content with encoded fragments, and - transmitting the encoded video stream to the client device.

## Description

The present invention relates to a method for streaming parallel user sessions from at least one server to at least one client of a plurality of clients to display a session on a display device connectable to the client wherein the sessions comprise video data and optional additional data such as audio data. The invention further relates to a system for streaming such user sessions. The invention also relates to a computer program for executing such a method and/or for use in a system according to the present invention.

Many solutions are available to display a user interface for use in a user application. Next to the well known PC, other examples are for example solutions that use for example a web browse for rendering of the user interface on the client. Then, additional software is often used based on a virtual machine such as for example Java-script, Macromedia flash MX, JAVA-based environments such as MHP, BD-J and/or Open TV. An advantage of such systems is that attractive environments can be created or that the amount of data to be sent can be relatively small. A disadvantage of those systems is that a close compatible operation needs to be present between the software on the servers and on the clients for compatibility reasons. Small version- or implementation differences will relatively often result in operational problems or deviations in the display of the user interface. Another disadvantage of such complex middleware can be security risks including attacks on the virtual machine by way of worms, Trojan horses or viruses. The practical usability of a design of a graphic user interface is normally limited by the feature richness of the clients. If new features are introduced a large time frame may lapse before all clients are provided with new software versions. Furthermore, such an upgrade requires a complex server and data transport organisation. Another disadvantage is that generally known systems ask for large processing capacity or computational power on the clients.

Even the next to the PC also well known set top boxes, which are meant to be simple, become large clients having middleware which is hard to maintain, at least possibilities for upgrading is limited and the distribution of the software is difficult. A further problem is that generally the functionality in the set-top boxes is implemented in hardware which makes updates very costly.

In order to solve the problems mentioned above, the present invention provides a method for streaming a plurality of parallel user sessions from at least one server to at least one client out of a plurality of clients for displaying the session on a display connectable to the client, in which such sessions comprise video data and optionally additional data such as audio data, in which the method comprises the steps of:
- defining encoded fragments based on reusable picture information, in which the encoded fragments are suitable for assembling assembling video data in a predetermined data format, such as a video standard or a video codec, and the encoded fragments are suitable for application in one or more pictures and/or one ore more sessions,
- assembling per session of a data stream comprising video data in which the encoded fragments are applied.

An advantage of such a method according to the present invention is that use can be made of very thin clients, such as clients with very basic video decoding capacities. For example, at the user side a device that is capable of decoding MPEG streams is sufficient. At the server side when using a method according to the present invention, a large number of parallel sessions can be supported, in which for each session only a fraction of computational power is needed as compared to what is needed in state of the art generation of for example a Mpeg stream. The same advantage exists at decoding, using other codecs. When applying the present invention, even simple devices such as DVD-players with for example a network connection are sufficient. Of course available, more complex devices could be applied at the side of the end users. No other requirements for such a device exist other than that a standard encoded data stream (codec) can be displayed. Compared to the known systems mentioned above, this is a considerable simplification.

According to a preferred embodiment the method according to the invention comprises the steps for applying, when defining the encoded fragments, of a plurality in a frame arrange able codec slices depending on picture objects to be displayed in the graphical user interface. Advantageously, use can be made of the picture construction of a data format. For example slices which are constructed using a plurality of macro blocks can be used at for example MPEG2.

Preferably, the method further comprises steps for performing orthogonal operations on texture mapS to enable operations on a user interface independent of reference pictures of the data format. Advantageously this enables operations on the user interface to be executed without or with minimal dependency on the real reference pictures on which the operations must be performed.

According to further preferred embodiment the method comprises steps for providing a reference of an encoded fragment to pixels of a reference image buffer in a decoder, even when the pixels in this buffer are not set based on this coded fragment This enables the applications of reference picture buffer pixels in an effective way as a texture map. This will reduce the data transfer and for example the computational capacity needed on the server. Furthermore it is not necessary to comply with for example a GOP structure that is for example provided in known video formats for free access in the video stream, a free accessible video stream is not required here. A further advantage is that the flexibility reached enables encoded fragments to be effectively chained for sequentially executing operations on pixels in reference buffers to achieve desired effects at the display.

Preferably the method comprises the steps of temporarily storing picture fragments in a fast accessible memory. By storing encoded picture fragments temporarily in a fast accessible memory, re-use of encoded fragments can be applied with great efficiency. Such a random access memory can be referred to as for example a cache memory. Preferably such cache memory is arranged as a RAM-memory_{.} However it is also possible to arrange part of the cache memory as a less fast accessible memory, such as a hard disk. This enables for example the save guard of encoded fragments during a longer time frame when the user interface is used for a longer period, with interruptions for example. By reading encoded fragments from the temporary memory they can be re-used with a time delay, in order to avoid encoding and redefining the fragments.

Preferably the method comprises the steps of adding a tag for identification of encoded fragments to the encoded fragments. This enables the tracking of data relating to the frequency or intensity of the use of a encoded fragment on the basis of which a certain priority can be given to a fragment. Furthermore a possibility is provided for associating the data related to the use in time and/or place on a display, to encoded fragments in order to incorporate a encoded fragment correctly in the user interface.

For appliance of texture mapping data into encoded fragments the method preferably comprises the steps for creating such texture mapping data. Based on a texture mapping field that is provided as input for the encoding steps, it can be determined in which way pixels can be used in the reference pictures. For one pixel or for one pixel block in the texture mapping field it can be determined when pixels of a texture map can be re-used or whether vectors for these pixels need to be used. Furthermore, it is possible to determine whether pixel values need to be processed by means of additions or subtractions.

According to a further preferred embodiment the method comprises the steps of using of data relating to the shape shape and/or dimensions Of the slices in the steps for defining the encoded fragment. Using slices with different formats and forms provides for a very flexible way of defining pictures or video pictures displayed in de graphical user interface.

Preferably the steps for the composition of the encoded video stream comprise the steps for the use of media assets such as text, pictures, video and/or sound. This allows the provision of a multi media interface in which within the definition of the graphical user interface multimedia elements can be freely displayed. This allows e.g. defining frames with moving pictures or photographs. This allows a graphical user interface in which e.g. a photo sharing application is provided. As an example, it is possible to display such a photo sharing application which is known as such within an internet environment on a normal television screen, using a set top box or an internet connected Mpeg player such as a DVD player for example.

A further aspect of the present invention relates to a system for streaming a plurality of parallel users sessions from at least one server to at least one client out of a plurality of clients for displaying the sessions on a display connectable to a client, in which the sessions comprises video data and possibly additional data such as audio data, comprising:
- at least a server for:
- encoding of re-usable image data to encoded fragments,
- assembling of video streams comprising at least a encoded fragment,
- receiving means for receiving at least user instructions,
- sending means for sending video streams in a pre determined data format, such as Mpeg or H.264, towards the clients.

By using such a system according to the present invention it is possible to create encoded fragments in which re-usable picture data is incorporated enabling composition of a plurality of video streams with a limited computational power for supporting a plurality of user interfaces of user sessions.

Such a system preferably comprises fast access memory, such as a cache memory for temporary storing of encoded fragments. By temporarily storing and re-using encoded fragments and by combining them with a high efficiency personalised video streams can be generated using a relatively small computational power and with short reaction times. Advantageously no copies need to be kept of the state of the reference frame buffers in the client contrary to the state of the art systems. This saves a large amount of memory.

According to a further preferred embodiment, the system comprises means for transforming and/or multiplexing of data streams for sending them to the client. These means contribute to a Further reduction of bandwidth and/or computational power.

Preferably the system comprises an application server comprising receiving means in which the application server is arranged to adjust a server and/or user application for display on a client. Preferably this application server takes into account parameters of predetermined video format, such as the video codec such as MPEG-2 and/or H.264.

In a further preferred embodiment the system comeprises means for exchanging data relating to the content Of a quickly accessible memory and the application server. These measures enable optimisation of the cache memory in the application as compared to data relating to picture elements to be used in the user interfaces about which the application server has data.

A further aspect of the present invention relates to a system according to the present invention as described above for executing the method according to the present invention as is described above. In a further aspect the present invention relates to a computer program for executing the method according to the present invention and/or for use in the system according to the present invention.

A further aspect of the present invention relates to a method for displaying objects of an arbitrary shape after they have been mapped to macro blocks. An advantage of such a method is that objects can be displayed in each other's vicinity while a circumscribed rectangle overlap. Furthermore it is possible to determine an overlap of such objects which enables game effects.

A further aspect of the present invention relates to a method for displaying video streams comprising steps for:
- transforming a video stream to a predefined codec,
- creating a structured information file associated with the video stream, and
- rendering the video stream based on the information in the structured information file.

An advantage of such a method is that efficient use can be made of the network, using information in the information file.

According to a further preferred embodiment, in the method only use is made of so-called P-frames.

According to a further preferred embodiment, at least two, such as three or more, display formats are placed in a VOB file so as to switch very fast between the different formats during display.

According to a Further preferred embodiment the file comprises a XML encoding or an otherwise structured division.

In a further preferred embodiment the method comprises steps for preserving the aspect ratio of the original picture.

A further aspect of the present invention relates to a method for displaying video streams by means of a system or a method according to the invention, comprising the steps for:
- defining bit requirements for a session,
- determining which fragments of which sessions are processed,
- providing a authorisation signal for a data stream for the session.

According to a further preferred embodiment the method comprises steps for differentiating between fragments that preferably are displayed real time and fragments that can be displayed without other quality loss other than delay other than real time.

According to a further preferred embodiment the method comprises steps for differentiating between fragments that can be linked to sound data and fragments that can be linked to sound data.

According to a further preferred embodiment the method comprises steps for dropping one or more fragments.

According to a further preferred embodiment the method comprises steps for delaying one or more fragments.

According to a further preferred embodiment the method comprises steps for providing additional inter frames.

According to a further preferred embodiment the method comprises steps for encoding the fragments, each having its own quant value.

Further advantages, features and details of the present invention will be described in greater detail below, using preferred embodiments with reference to the enclosed figures. In the figures similar elements are referred to by means of the same reference numbers in which the person skilled in the art will appreciate the similarity as well as possible minor differences between similar indicated elements.
- figure 1 is a schematic presentation of a first preferred embodiment of a system embodying the present invention,
- figure 2 is a schematic presentation of a preferred embodiment of part of the system according to figure 1,
- figure 3 is a schematic presentation of a client suitable for application of a system according to the present invention,
- figure 4 is a flow chart of a preferred embodiment of a method according to the present invention,
- figure 5 is a flow chart of a preferred embodiment of a method according to the present invention,
- figure 6 is a flow chart of a preferred embodiment of a method according to the present invention,
- figure 7 is a flow chart of a preferred embodi - ment of a method according to the present invention,
- figure 8A-D are presentations of picture transitions of application in a system or method according to the present invention;
- figure 9 is a schematic presentation of a further preferred embodiment according to the present invention;
- figure 10 is a schematic presentation of a part of the system according to figure 9;
- figure 11 is a sequence diagram according to an embodiment of the present invention;
- figure 12A-C are flow charts of a method according to embodiments of the present invention;
- figure 13 is a schematic presentation of a further preferred embodiment according to the present invention;
- figure 14 is a flow chart of a further preferred embodiment of the present invention;
- figures 15 and 16 are schematic examples of picture elements and their processing according to the present invention;
- figures 17 and 18 are flow charts of a further preferred embodiment according to the present invention;
- figures 19-22 are schematic presentations of system components and data transitions according to further preferred embodiments of the present invention;
- figure 23 is a schematic presentation of a further preferred embodiment of the present invention;
- figure 24 is a schematic presentation of system components and data transitions according to a further preferred embodiments of the present invention;
- figure 25 is a schematic presentation of a method according to a further preferred embodiment of the present invention.

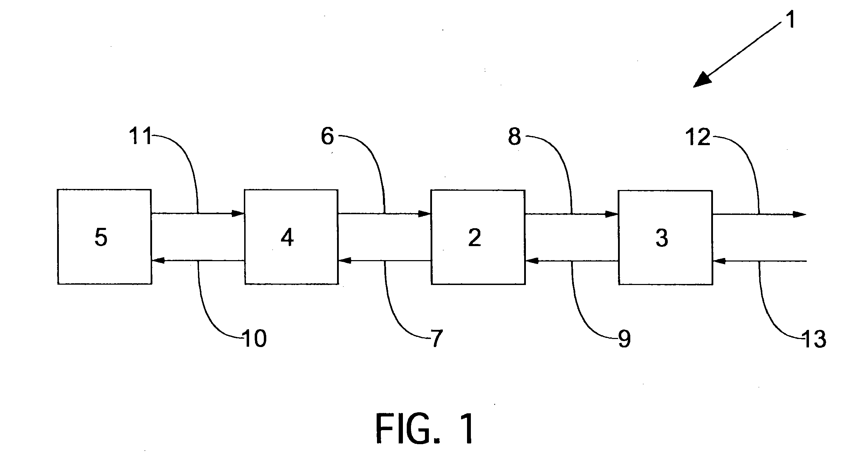

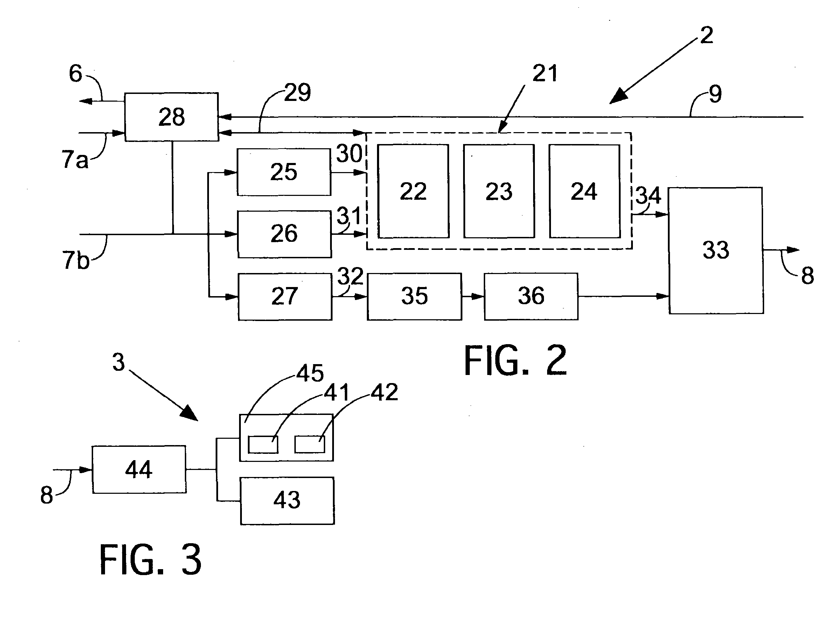

A first embodiment (figure 1, 2) relates to a subsystem for display of user interfaces of a user session that is to be displayed on a display device of a user. Roughly, applications that operate on a so called front end server 4 according to the present invention are arranged for display via a so called thin client 3, also referred to as client device 3. Such a thin client is suitable for displaying a signal in a format of a for example relatively simple video codec such as HPEG-2, H.264, Windowns media/ VC-1 and the like. The application that runs on the front end server 4 generally applies data originating from a back end server 5 that typically comprises a combination of data files and business logic. It may concern a well known internet application. The present invention is very useful to display graphical applications such as internet applications on for example a TV-screen. Although it is preferable that such a TV-screen has a relatively high resolution, such as known for TFT-screens, LCD-screens or plasma screens, it is of course possible to apply a TV-screen having a relatively old display technique such as CRT.

From the back end server 5, for example XML items and picture files or multimedia picture files are transferred to the front end application server via the communication link. For that purpose the front end application server is able to send requests via the connection 4 to the backend server. The front end application server preferably operates based on requests received via the connection 7 originating from the ren-derer 2 according to the present invention. In response to these requests, the content application for example provides XML description, style files and the media assets. The operation of the renderer 2 according to the present invention will be described in greater detail below.

The operations of the renderer are executed based on requests 9 based on user preferences that are indicated by the user by means of selecting elements of the graphical user interface such as menu element or selection elements by means of operating via a remote control. An example is that a user performs such actions similar to the control of menu structure of for example a DVD player or a normal web application. In response to the requests 9 the renderer provides encoded audio and/or video pictures in the predetermined codec format such as MPEG-2 or H.264. The received pictures are made suitable for display on the display device such as the television via the signal 12 by the client device 3.

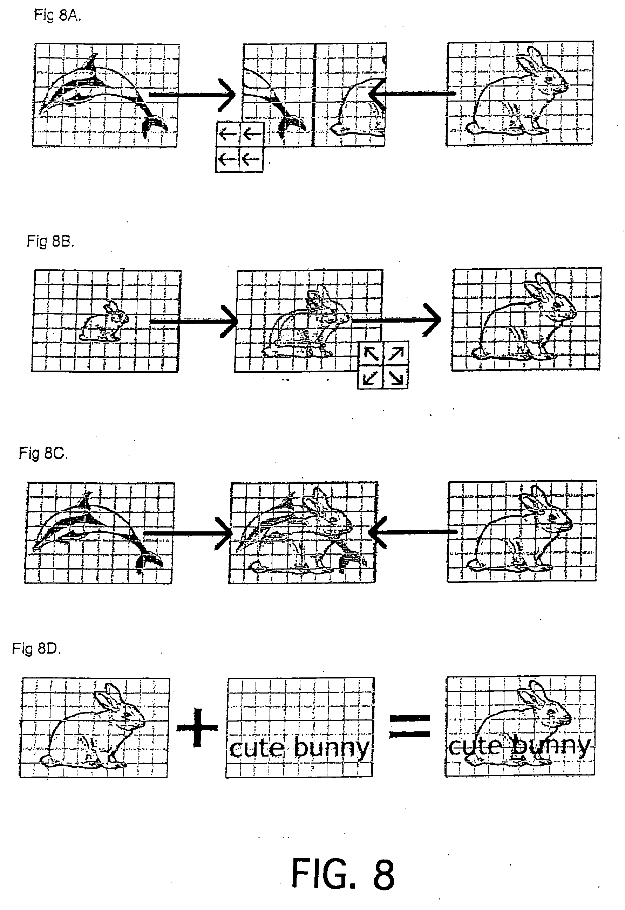

In figure 3 schematically such a client device 3 is shown. The signal received from the renderer, which is multiplexed in a way described below, is received and/or demultiplexed at the receiving module 44. Next, the signal is separately supplied to the audio decoding unit 43 in the video decoding unit 45. In this video decoding unit 45 two reference frame buffers are schematically shown as they are applied by MPEG-2. For example in the event of a codec, such as H.264, even 16 reference frames are possible. Depending on the decoding codec present in the client device it is possible to apply more or less advanced operations according to the present invention, which is described in greater detail with reference to figure 8.

In the following, the renderer 2 will be described in greater detail with reference to figure 2. As described above, the module for the application logic 28 operates based on the instructions 9 which are obtained from the end user. These instructions are sent from a device of the end user via any network function to the module 28. For this each possible network function is suitable, such as an internet connection based on the TCP/IP protocol, a connection based on ART2 and the like. Furthermore, wired or wireless connections can be used to provide the physical connection. After receipt, the module 28 comprising the application logic, interprets the instructions of the user. Based on for example an XML page description, the styling definitions and the instructions of the user, updates of the display can be defined. This may concern incremental updates such as cursor updates as well as complete screen updates.

Based on the user preferences of the instructions 9, the module 28 can determine how the update of the display data needs to be performed. On the one hand it is possible by means of requests 6 to the front end server to request for data relating to new XML page descriptions and style definitions 7a, and on the other hand to request media assets such as pictures, video data, animations, audio data, fonts and the like 7b. However it is also possible that the module 28 defines screen updates and/or instructions therefore based on data that is exchanged with the renderer 21, comprising the fragment encoder 22, the fragment cache 23 and the assembler 24 which are described in greater detail below. If use is made of newly supplied data 7a and 7b this will respectively be processed in the preparation module 25 and 26 for respectively producing pixels and texture mappings for picture- and video data and the module 27 for processing audio data. The module 25 is indicated as a module for rendering, scaling and/or blending for defining data relating to pixel data. The module 26 is intended for creating texture mapping for e.g. transition effects for the whole screen or part of the screen. The resulting pixels and texture mappings respectively are input for the module 21. The audio data processed in the module 27 is executed as audio samples 32 which are encoded in the audio encoder 35 and stored in the audio cache 36 for outputting these data towards the multiplexer and transmitter 33.

The module 21 comprises three important elements according to preferred embodiments of the present invention, being the fragment encoder 22, the fragment cache 23 and the assembler 24. The fragment encoder 22 encodes fragments based on data of the module 28 and the modules 25 and 26. A encoded fragment preferably comprises one or more pictures. Longer picture sequences are supported as well. Pictures in an encoded fragment may compose one or more different slices. Slices are defined in codec standards and have known definition parameters depending on the codec. Codec fragments may comprise pictures which are smaller than the target picture screen size. Encoded fragment slices may or may not be present at each vertical line and may or may not comprise complete horizontal lines. A number of different slices may be present on one single horizontal line if this is allowed by the codec parameters.

According to the present invention, the above may lead to a larger amount of slices than is applied at normal use of a codec since a known video encoder will minimize the amount of slices in order to obtain maximum encoding efficiency. An advantage is that by means of encoding fragments, so as to fulfil requirements of the applied codec in an efficient way, the assembler according to the present invention is able to combine in a very efficient way the encoded fragment into pictures or parts of it since it may replace or delete complete slices and this is not possible with parts of the slices. For example, on applying a MPEG encoding the dimensions of macro blocks can be taken into account when producing the encoded fragments. This will greatly reduce the amount of computational power for the production of the encoded fragments and/or the composition of outputted picture by the assembler 24.

Further advantage may be obtained in that encoded fragments are encoded in such a way that they can refer to pixels from the reference frame buffers in the client device even when the pixels in this buffer are not set by means of this encoded fragment. With this the reference frame buffers are applied as texture map in an efficient way. Picture types are flexible in the device since there is no need to comply with a GOP structure. This flexibility makes it possible that encoded fragments are effectively connectable for sequential functioning on the pixels in the reference buffers to obtain wanted effects on the picture screen.

De fragment cache 23 serves for storage of the encoded fragments for re-use thereof. Preferably, those encoded fragments are stored in the cache memory that are repeated relatively often in an user application or for example in many different sessions of the same application. The efficient re-use of the frequently appearing encoded fragments out of the fragment cache greatly reduces the encoding time for the processing unit of the server. Besides this reduction in the encoding processing time, an external saving is also achieved by external duplication rendering of the pixels is avoided.

The assembler 24 enables the combination of a number of encoded fragments into a video stream according to a predetermined format in a very efficient way. The algorithm needed is based on the implication of the already mentioned concept of slices that is applied in a plurality of video codecs such as MPEG-2 and H.264. With this, slices are defined as parts of encoded pictures that can be encoded in an independent way. The purpose of slices according to the state of the art is to obtain error resistance. According to the present invention the assembler 24 applies the slices to effectively combine the slices into encoded fragments which are encoded independently.

De fragment cache 23 enables high efficiency of the encoded fragments to be re-used and re-combined for the production of personalised video stream for displaying the user interface. For this, a relatively small amount of computational power is used because of the efficiency offered. For example, no copy of the state of the reference frame buffers need to be kept in the decoder, as compared to the state of the art encoder which saves large amounts of storage and calculation capacity for the addressing.

Because of the different savings mentioned above large amounts of video streams can be generated with relatively limited processing capacity which is for example present on a suitable server. If picture elements stored in cache can be re-used relatively often, which is the case when distributing in a user face of an application to many users, such savings will be largely achieved.

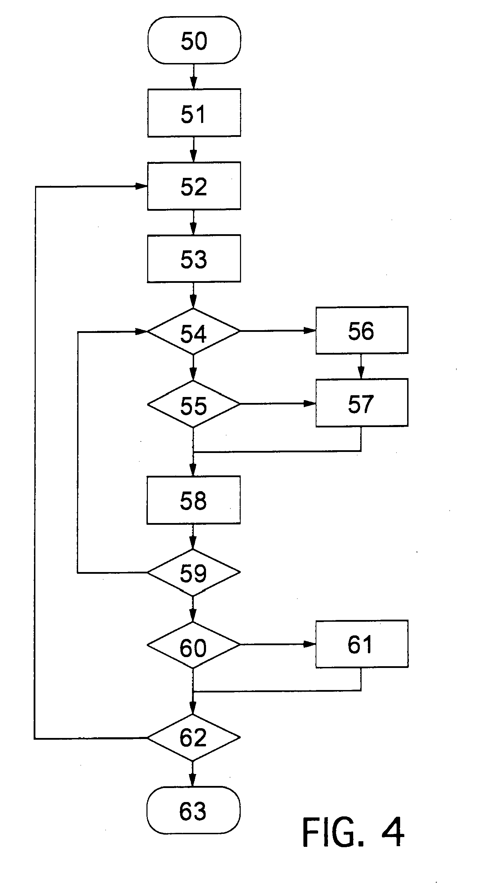

In figure 4 a preferred embodiment of a method of the encoding of fragments is displayed in a flow chart. Input in the fragment encoder 22 comprises sequences of one or more pictures, each comprising picture shape description, pixel values and a texture mapping field. Texture mapping fields for input in the fragment encoder describe in which manor picture points or pixels are used in the reference pictures according to the present invention. Per pixel or pixel block the texture mapping field describes whether pixels of the texture map are being re-used and if so whether the vectors used for these pixels are added or subtracted.

Encoded fragments are produced in the encoder with codes for efficiently combining these encoded fragments with other encoded fragments. For this purpose extensions are present in the encoder according to the present invention as opposed to present encoders. Although the number of degrees of freedom for the encoder as compared to a state of the art encoder is limited, the encoder according to the present invention gives advantages by way of for example applying constant parameters for all encoded fragments, such as in the Quantisation matrix using MPEG-2.

By carefully choosing encoded parameters on picture level, such as picture order, picture type, movement vector ranges, frame/field and slice structure, these can be compatible with encoded fragments that are meant to be merged at a later stage. The slice structure is substantially defined by the picture shape and can therefore be different from a slice structure according to the state of the art. For example, not the complete picture of a picture needs to be covered with a slice.

When picture information is supplied by the application logic 28 to the fragment encoder 22 it can be indicated which pictures are meant for Later merging thereof or meant for, for example, use with each other in time and based on this for facilitating the choice of suitable encoding parameters. Alternatively, global parameters can be set by the application logic for the session or for a number of similar sessions. According to a further embodiment, the fragment encoder maintains a number of states, comprising encoding parameters, for previously encoded fragments and subsequently determines parameters relating to these states. According to a further embodiment, the conflict resolution is solved in the assembler without control based on parameters coming from the application logic. This conflict resolution will be described below, together with the description of the assembler and its use.

The method starts at step 50. In step 51 pixels and texture mappings are read from the modules 25 and 26 by the fragment encoder 22. Such a texture mapping or texture mapping field acts as a definition for picture shape description, pixel values, and how the pixels in the reference pictures need to be used. In a pixel or pixel block (such as in macro block) the texture mapping field describes whether pixels are reused out of the texture map and if so, possible vectors that can be used for these pixels and possibly whether pixel values need to be added or subtracted. This enables the realisation of 2D movement of the blocks of texture pixels. Since fragment pictures that are decoded can be incorporated in the reference pictures as well, the process can be interactive which enables processing of texture mappings on the same pixels in consecutive pictures.

In step 52 the picture restructuring, the picture type and the parameters are being set. The picture order and picture/slice types as well as macro block types are derived from the texture mapping field. The picture order is determined by the order in which textures and pixels need to be used. In the situation wherein macro blocks re-use texture pixels, preferably the macro blocks are INTER encoded and the movement vectors are determined by the texture mapping field. If macro blocks do not reuse texture pixels and are determined by the pixel values that are provided for input, the micro block is INTRA coded.

In step 53 the reference pictures and picture shape and slice structure are set. According to the method described above, for this the number of slices is not minimized as is known from the state of the art, but fragments are encoded in view of optimizing the encoding of slices depending on the picture elements to be displayed in view of the codec. In case of codecs that do not need a new slice per horizontal macro block line, such as for example H.264, it is important that the encoder functions correctly in relation to fragments. If for example other fragments are standing together on a macro block line at the left or right side of a predetermined fragment, this is based on the encoded meta information. For example with mpeg-2 one new slice per horizontal macro block line is needed.

In the assembler 24 which will be described in greater detail below, whole slices can be replaced or deleted from a picture frame but not parts of it. In the meta information to be encoded such additions or replacements are not taken into account in the assembler 24 when additional slices need to be placed. Such a method is helpful when filling certain areas in a background picture by means of other fragments. Also not rectangular pictures can be applied herewith by using many slices when no actual macro blocks of picture information is provided in a picture frame. Such non rectangular pictures or parts thereof are visible when picture information is projected over a background.

In step 54 the encoder of each macro block checks whether the type of macro block and/or movement vectors are prescribed by the process of the texture mapping. In other words, it is checked what the answer is to the question 'texture mapped?'. If this is the case the macro block type and movement vectors are derived based on the texture mapping vectors. If this is not the case an algorithm for the macro block type and the movement estimation can be executed similar to a known encoder. Defining the macro block type and the estimation of the movement is performed in step 56.

If in step 54 it is determined that the texture mapping is performed, then in step 55 it is checked whether the pixels are defined. If this is not the case then in step 57 known processes such as movement compensation, transformation (such as dct in the case of Mpeg 2) and quantisation are executed. The setting of the quantiser can be set externally. This enables for example a higher quality of encoding for synthetic text as compared to natural pictures. Alternatively the encoder determines a suitable quantiser setting based on the bit rate to be applied for the encoded fragment for the display of the user interface for which the method is performed.

In step 58 the variable length encoding of the output is determined. With this the headers of the slices, parameters of the macro blocks and the block coefficients are VLC-coded in a way suitable for the codec applied, and are executed. These steps are repeated for each macro block of the slice and the method returns to step 54 if in step 59 it shows that yet another macro block or slice has to be coded.

In step 60 it is determined whether the performance of step 61 is necessary for executing the texture maps. If this is necessary for the texture maps in this step 61 reference picture are actualised by means of inverse quantisation and/or movement compensation and optional post processing in the loop. These new reference pictures are applied for next pictures in the fragment.

Next, in step 62 it is determined whether there is a next picture to be encoded in which case the method returns back to step 52. If the last picture is INTER coded, for which holds that a last received INTER encoded picture is not shown on the screen of the user for reasons of the reference character, then at the end of the method for processing pictures for the encoded fragment an additional 'no changes' picture is generated. The method ends at step 63.

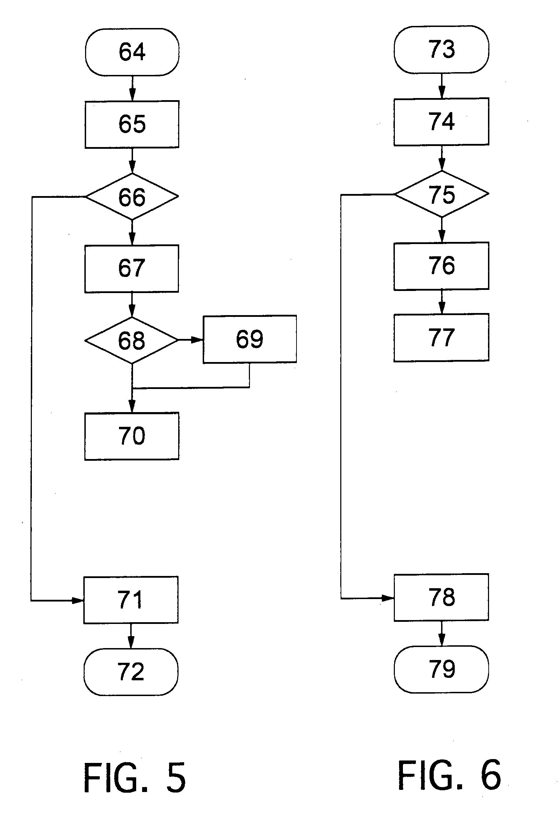

In figure 5, a method is described according to an embodiment for the functioning of the fragment cache 23 relating to the addition of fragments to the cache. This cache 23 mainly functions for storage of encoded fragments and the distribution thereof over the different user interface sessions that are generated by the assembler 24 as will be described below. A second function of the fragment cache is the distribution of fragments of live streams that are not stored in the fragment cache if they are not reused but that can be used in parallel in sessions at the same moment. For this the fragment cache functions to forward and multiply the picture information. It is very important that a smart management is performed related to the available system resources for maximizing the efficiency. The memory of the fragment cache preferably comprises a large number of RAM memory for quick memory access, preferably complemented by disk memory.

For identification of encoded fragments a so called cache tag is applied. The cache tag is preferably unique for each separately encoded fragment and comprises a long description of the encoded fragment. For this unicity a relatively long tag is preferred while for the storage a short tag is preferred. For this reason the tag, or part of it, may be hashed by the fragment cache in combination with a lookup table. Next to a unique description of picture information and/or pixels of a encoded fragment, a tag may further comprise specially encoded parameters that are applied in a method according to the present invention.

If a encoded fragment is offered as input for the encoder 22 and is already being stored in the fragment cache, then this fragment does not need to be encoded again and can instead be read by the assembler out of the cache when assembling the final video stream.

If the encoded fragments are not stored in the cache, then the storage in the cache 23 is possible after their coding.

Whether a encoded fragment is really accepted by the cache depends on the amount of free memory in the cache and the probability of the fragment being reused and the probability of the frequency thereof. For this a ranking is made in which for each new fragment it is determined where it should be in the ranking.

The method starts in step 64. In step 65 a cache tag is retrieved for a new input. Next in step 66 the tag is hashed and searched. If it is present in the cache, the fragment and the associated meta information is retrieved in step 67. If in step 66 it shows that the fragment is already stored, the method continues in step 71 and ends in step 72. In step 68 it is checked whether sufficient memory is available for the fragment or a fragments with the matching ranking for example based on frequency or complexity of the encoding of the fragment. If this is not the case, then in step 69 fragments with a lower ranking are removed from the cache and a fragment is added in step 70 and the method ends. Alternatively, the new fragment is not scored in the cache if this is full and the ranking is lower than the fragments stored in the cache.

In figure 6 a method is described according to an embodiment for the functioning of the fragment cache 23 related to the retrieval of fragments from the cache. The method starts in step 73. In step 74 a cache tag is supplied by the assembler for searching the fragment in the memory. If the fragment is not present, then in step 78 an error is reported and the method ends in step 79. In the other situation the fragment and the meta information is retrieved from the cache memory. Next, in step 77 the meta information is actualised related to the renewed use of the fragment.

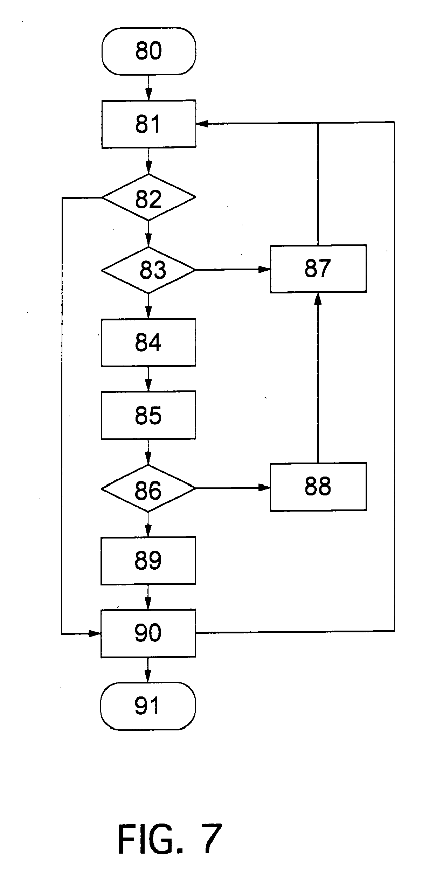

In figure 7 a method is described according to an embodiment of the functioning of the assembler 24. The assembler serves for the composition of a video stream out of the fragments that are encoded in the fragment encoder; preferably as much as possible stored fragments in the fragment cache. For this inputs in the fragment composer comprise fragments and positioning information for the fragments.

The method starts in step 80. In step 81 for the pictures to be displayed fragments applicable in the video stream and the slices that make up the fragments and related picture parameters are input in the assembler. In step 82 it is checked whether active fragments and/or slices are present. If there are no active fragments present, then a 'no change picture' is generated by the assembler. A selection is made out cf the following possibilities. The assembler generates an actually fitting picture in which no changes are coded. Alternatively no data is generated. With this it is assumed that if the buffer at the decoder becomes empty, the picture will freeze and no changes will be displayed. This will reduce network traffic and will improve reaction times.

In step 82 it is determined whether there are active fragments. If this is the case, picture parameters need to be determined. If there is one active fragment, the associated picture parameters can be applied for the picture to be displayed. If there are more fragments active, it is checked whether all picture parameters that are used for encoding of the parameters are compatible. Relevant parameters for this are picture order, picture type, movement vector range (such as f-codes), etc.

If accordingly in step 82 it is determined that active slices of fragments are present in the input information of step 81, then in step 83 it is determined whether conflicting picture parameters do exist. If this is the case then in step 87 a kind of conflict resolution is used as will be described in greater detail below.

Several embodiments of the method for handling such conflicts exist among which the following. The fragments with conflicting parameters can be encoded again. Furthermore conflicts relating to parameters of fragments are solved by means of for example re ranking, duplication, dropping or delaying thereof. Although some deviations may occur, these will hardly be noticed by the user as a result of for example very short display times of such artefacts. A major advantage of such conflict handling is that they need only very little computational power an can therefore be performed for many sessions next to each other. A practical example is that when different encoded fragments apply different P and B picture sequences, this can be resolved by duplicating the B pictures or removing from a part of the encoded fragments.

In step 84 slices are repositioned to correct X and Y positions on the display. A purpose for this is that the graphical user interface is optimized by the video codec and/or display resolution that is used in the session. It is for example advantageous that if picture elements in the renderer are tuned to the position of macro blocks or slices or lines on which these can be aligned. The information relating to the determined X and Y positions are placed in the headers of the slices. In this way a repositioning can be performed using relatively little computational power by only writing other positioning data in the header.

After the repositioning in step 84, in step 85 slices and/or fragments are sorted on the X and Y position, preferably first in the Y position and next in the X position in order in which these will be applied in the used codec. If may occur that slices and/or fragments overlap. In that case, in step 88 conflict solving is performed. With this it is possible that background slices that are fully overlapped by foreground slices are deleted. If multiple foreground slices overlap according to the present invention a picture splitting algorithm can be used to get two or more pictures instead of one. With this each picture has its own picture parameters or slice parameters and they will be shown after each other. The visual effect of such an intervention is again hardly noticeable by the human eye. This enables the interleaving of two or more fragments. Alternatively, it is possible that the fragment encoder 22 comprises means for combining slices using pixel and texture mapping information of the macro blocks for producing of a combined result.

In step 89 openings or empty spaces in the picture are filled when these are not filled by a slice. For this purpose for such empty spaces one or more slices are defined which slices do not coat processing for these macro blocks. Next picture headers, comprising for example picture parameters, are defined and similar to the sorted slices, are processed in a serial manner in the shape of a encoded picture and stream corresponding to the video standard used for the session of the user interface.

With reference to the figures 8A-D picture transitions and methods for performing them according to embodiments of the present invention are described. With this, according to the present invention pixels that are available in the reference pictures of the client device, or decoder for the coded, are re usable as a texture map. Encoders of the state of the art function under the assumption that reference pictures are not initialized and can therefore not be applied at the beginning of a sequence. According to the present invention encoded fragments are encoded to become part of larger sequences in which reference pictures at decoding comprise usable pixels of previously decoded encoded fragments. These pixels according to the present invention are applicable as a texture for a encoded fragment. Depending on the characteristics of the applied codec, use can be made of a number of reference pictures, such as 2 reference pictures in case of a MPEG-2 and for example 16 reference pictures in case of H.264.

By hereby applying movement vectors, it is possible to display movements of pictures or picture parts. Since encoded fragment pictures that are encoded will the part of the reference pictures, this process can be applied iteratively in which for example texture mapping processes are applied on consecutive pictures and processes thereof.

A further example of such processing relates to affine transformations in which pictures for example change size. With this texture pixels can be enlarged as is shown in figure 8B. For larger changes it is possible to provide one or more interlaying reference pictures with a resolution that is better than that of a enlarged picture element, based on which inter reference picture further processes can be performed. How many reference pictures a reused for a transition from small to large can be determined based on available bandwidth or computational capacity that is available in relation to quality demands for the graphical quality of the pictures. Furthermore use can be made of codec dependent possibilities such as weighted predictions (H.264) for providing easy transition or cross fades between pixels of different texture pictures, as is shown in figure 8C. Bilinear interpolation can be an alternative for this.

An approach of texture overlays and Alfa blending can be achieved by means of adding or subtracting of values of the texture pixels in order to change the colour or identity thereof, as is shown in figure 8D. By adding or subtracting a maximum value, a pixel can be set to for example a black or white value, which process can also be referred to as clipping. By first applying a clipping step on a chrominance and/or luminance value and then by adding or subtracting a suitable value, each required value can be set within the texture and each overlay can be provided at pixel level. Such a two step method can be realised almost invisible to the eye, and surely during easy transitions. These processes for texture mapping using reference pictures offer a large improvement of the performance at little computational power or bandwidth use since the data needed is available in the reference buffers of the decoder during the moment of display. Furthermore the inter-dependency on data of different encoded pictures is limited increasing reuse and cache efficiency.

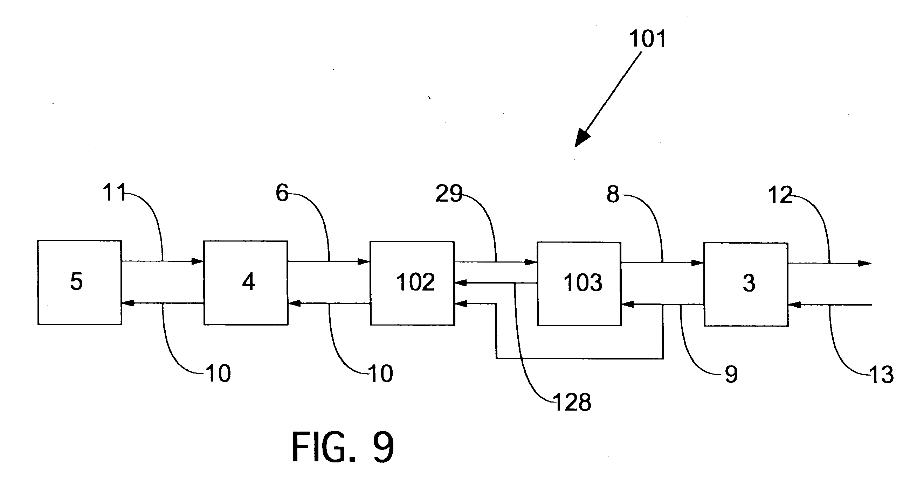

A further preferred embodiment (figure 9) according to the present invention relates to a system 101 with a substantially similar purpose as the system of figure 1. Applications that operate on the application servers 4, 5 are adapted for rendering on the client device 3 by means of the server 102 and the server 103. Fragments are being created in the server 102 together with assembly instructions that are related to the position on the screen and/or the timing of the fragments in a video stream that can be received by the client device 3. The fragments and the assembly instructions are then transmitted to the video stream assembly server 103. The video assembly server 103 produces, based on this information, the video stream 8 for delivery thereof to the client device. In case the video assembly server 103 has no availability of certain fragments, it will retrieve those by means of a request 128 to the server 102.

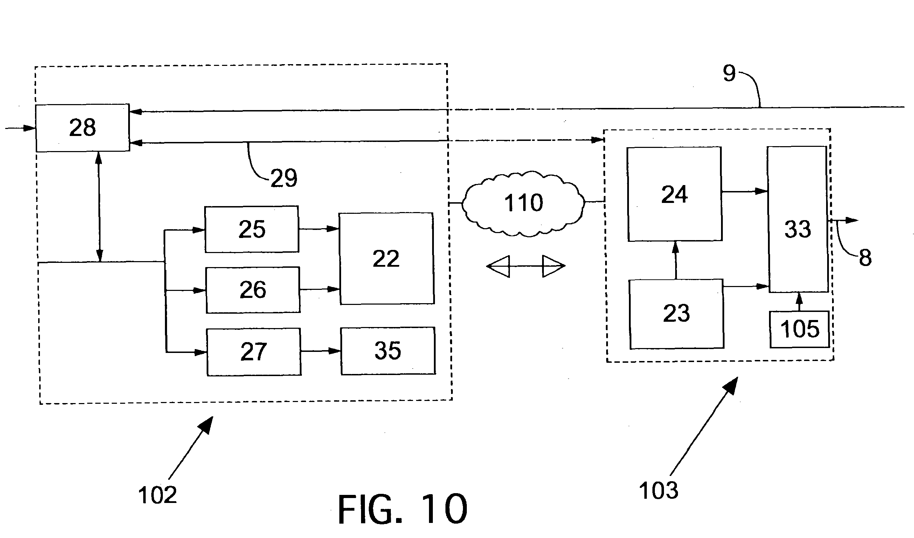

This is shown in greater detail in figure 10. The server for assembly of the fragments and the creation of the assembly instructions 102 comprises substantially the same elements as those are shown in figure 2. A noticeable difference of the embodiment of figure 10 vis a vis the embodiment of figure 2 is that the servers 102 and 103 are mutually separated, in other words mutually connectable by means of a communication network 110. This communication network 110 is preferably the open internet but this may also be a dedicated network of a network provider or of a service provider for providing internet access. When such a network 110 between the servers 102 and 103 is applied, it is possible to use in itself known cache functions of such a network. In case of the internet use is often made of e. g. cache functions in nodes. By enabling communication between the servers 102 and 130 on a for the network standardized manner, fragments that are send via this network may be send in an efficient manner, e.g. by applying cache possibilities in the network. For example, use can be made of a 'GET' instruction that is part of http.

The server 103 is used for assembly of the video streams that are finally transferred to the e.g. setup box (client device) of the end user. The functionality of the fragments assembler is substantially similar to that of the fragment assembler 24 of figure 2. A difference is that this fragment assembler 24 of figure 10 receives the instructions after transport thereof over the network 110. This applies equally to the applicable fragments. In a similar manner as is described in the above, the cache function 23 of the server 103 serves the purpose of temporary storing of re usable fragments or fragments that need to be temporarily stored because these have been created before in anticipation on the expected representation of images in this video stream.

The fragments may be used or stored directly in the server 103 in a cache memory. Such a cache memory may suitably comprise RAM memory and hard disk memory (ssd). Also at the side of the server 102, a temporary storage may be provided of fragments and assembly information units in several servers 103 for distinct user groups.

For increasing the efficiency of the unit, a so called filler module 105 is comprised that creates dedicated filler frames or that fills frames with empty information, that is information that does not need to be displayed on the display device of the user, such as is disclosed in the above. The intention hereof is, as is indicated in the above, to apply information that is present in image buffers of the client device for presenting images on the display device when no new information needs to be displayed or when such information is not yet available because of system latency.

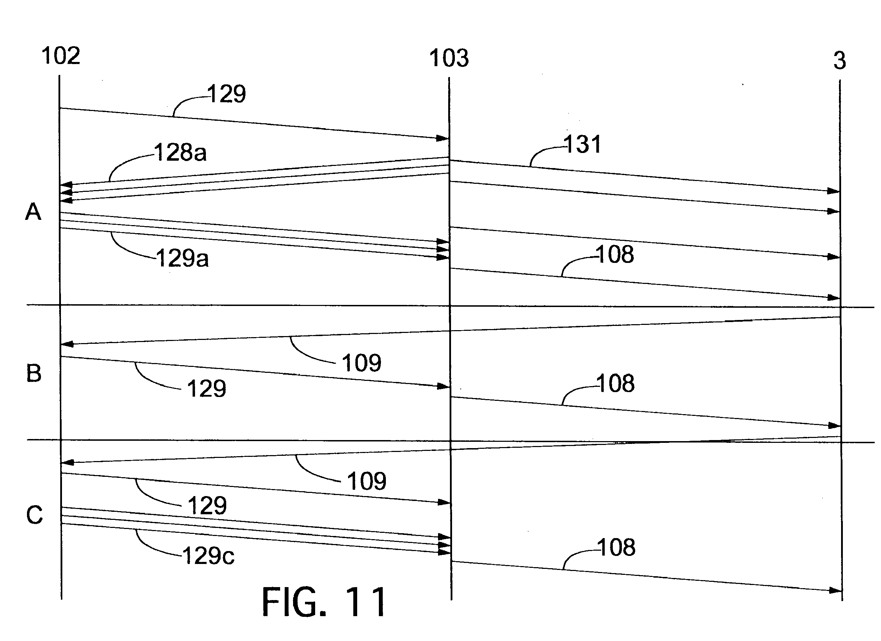

Referring to figure 11, this is disclosed in further detail. An advantage of this embodiment is that such filler frames provide large savings in bandwidth and processor capacity between the server 102 and the server 103.

In figure 11, a sequence diagram is shown for performing of a number of steps according to an embodiment. Figure 11a shows how assembly information 129 is transferred from the server 102 to the server 103. After the server 103 receives the assembly information 129, the server 103 determines whether all fragments that are required are present in the cache. When this is not the case, the server 103 will retrieve the required fragments by means of information requests 128a. In the time period that is required for retrieving and processing of the required fragments, the server 103 may transmit filler frames 131 to the client such that the client can provide the display device of the required information in a manner that is depended on the image compression standard. In case of e.g. mpeg2, the majority of the current devices require regular information with regard to the structure of the images for every frame that is to be displayed. The server 102 provides the server 103 with the required encoded fragments by means of information transmissions 129a in reaction to the send fragment requests 128a. After processing of the request by the server 103, the server 103 sends an encoded audio video stream comprising the information of the encoded fragments 129a in the form of a stream 108. The server 103 can assemble the images of the video stream based on the fragments and the assembly information.

In figure 11b, it is shown how the system functions in case the end user inputs an information request by means of e.g. his remote control. The user enters e.g. based on the graphical user interface on his display device choices or another input into his remote control, which input is received by the client device 3. Based on this, the client device transmits via a network instructions that reflect the wishes of the user to the server 102, wherein the network may comprise a cable network, the internet or a mobile network. The server 102 subsequently makes sure that the user is provided with the correct video stream via the server 103. To this end, the application module 28 determines in which way within the structure of a used codec the information can be displayed on the display device in an efficient manner for the purpose of the user, based on data from the application front end 4. The desired information is subsequently processed by the modules 25, 26, 27 that are described in the above referring to another preferred embodiment.

The fragment encoder 22 subsequently creates the fragments. The application unit 28 also creates the assembly information. The assembly information is transferred by means of the communication 129 of figure llb from a server 102 to a server 103 via e.g. the open internet. Subsequently, the video stream 1 08 is assembled from the fragments based on the assembly information, in this case based on fragment information that already was present in the server 103. In case such fragment information is not available, the method of figure 11a is repeated. As a result the desired video stream is shown to the user by means of the set-top box 3.

In figure 11c, the method is also started with an information request 109 of the user of the set-top box 3 to the server 102. In reaction to this, the assembly information is transmitted from the server 102 to the server 103, followed by the encoded fragments that are necessary for representing the desired image to the user. In this case, the server 102 has information that these fragments are not present with the server 103. E. g. , i n case of live transmissions, it is known to the server that certain fragments cannot be available at the server 103.

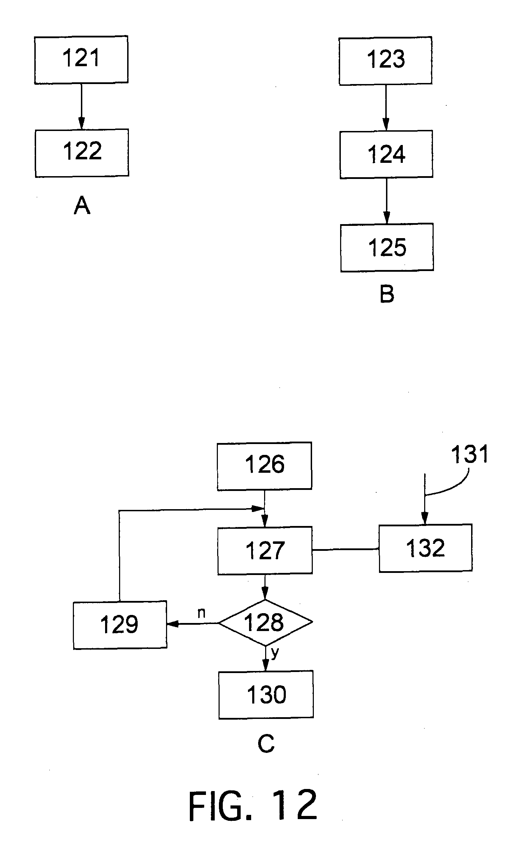

In figure 12a, it is shown that based on user input 121, that is ultimately emanating from his input device, such as the remote control, the assembly information for the user session is transmitted in step 122 from the server 102 to the server 103.

In figure 12b, a method is shown for retrieving fragments by the server 103 from the server 102. I n step 123 requests are being sent from the server 103 to the server 102. In these requests, based on not available required fragments, a request for supply thereof is being made. The application module 28 determines based on data of the application which data are required for this, and sends instructions to this and via the module 25 and 26 to the module 22 in step 124. After creation of the fragments that are desired by the server 103, these are transmitted from the server 102 to the server 103 in step 125. In case the server 103 already created these fragments at an earlier stage, these may be retrieved from a in the server present cache in case the fragments were stored in the cache.

The server 103 performs the steps that are shown in figure 12c. In step 126, the assembly information is received that has been transmitted by the server 102. Subsequently, in step 127, a request is made towards the cache 23 to provide these fragments to the fragment assembler 24. In step 128, the cache unit 23 determines whether the fragments are present. In case these fragments are not present, a request is made in step 129 to the server 102 to transmit these fragments to the server 103. These steps are performed according to the method depicted in figure 12b. Subsequently, the method returns in step 128 until the required fragments are present in the cache. Alternatively, based on the request, provided fragments may be directly processed on arrival in the server 102. Thereafter, based on all fragments and the assembly information, an image or video stream is assembled. In the embodiment of the figures 9-12, further savings in bandwidth are achieved when e.g. the server 102 is located in a data centre and the server 103 is located closer to the client, e.g. in a neighbourhood facility. The video streams that are transmitted from the fragment assembler 24 of the server 103 to the clients, uses a lot of bandwidth, yet these can comprise much redundancy, such as a multitude of repeating fragments. An important part of such redundant information is diminished by using the image buffers in the clients in a way that is also described under reference to the first embodiment. Furthermore, it is advantageous from the point of view of the network to transmit this use of bandwidth through as small a part as possible of a network.

The required bandwidth between the server 102 and the server 103 comprises a very limited amount of redundancy and this path can be many times more efficient than the path from the server 103 and the client 3. Because of this, it is furthermore possible to operate several fragment cache units and fragment assemblers in relation to one or more fragment encoders, whereby the maintenance of the systems may be performed by several system maintenance operators. This allows for advantages with respect to maintenance and stability.

A further purpose according to the present invention is to represent objects of a random shape after these have been mapped towards macro blocks.

It is a further purpose of the present invention to render the objects of a random shape for representation in a manner that is efficient in operation with respect to bandwidth.

It is a further purpose of the present invention to perform the rendering of objects of a random shape for representation in a manner that is efficient with respect to computing power.

It is a further purpose of the present invention to perform the rendering of objects of a random shape for representation in which use is made of the mapping of micro blocks.

It is a further purpose of the present invention to perform the rendering of objects of a random shape for representation in which movement towards each other of image elements is possible while applying a mapping into macro blocks.

It is a further purpose of the present invention to perform the rendering of objects of a random shape for representation in which the overlap of image elements is possible under application of mapping towards macro blocks.

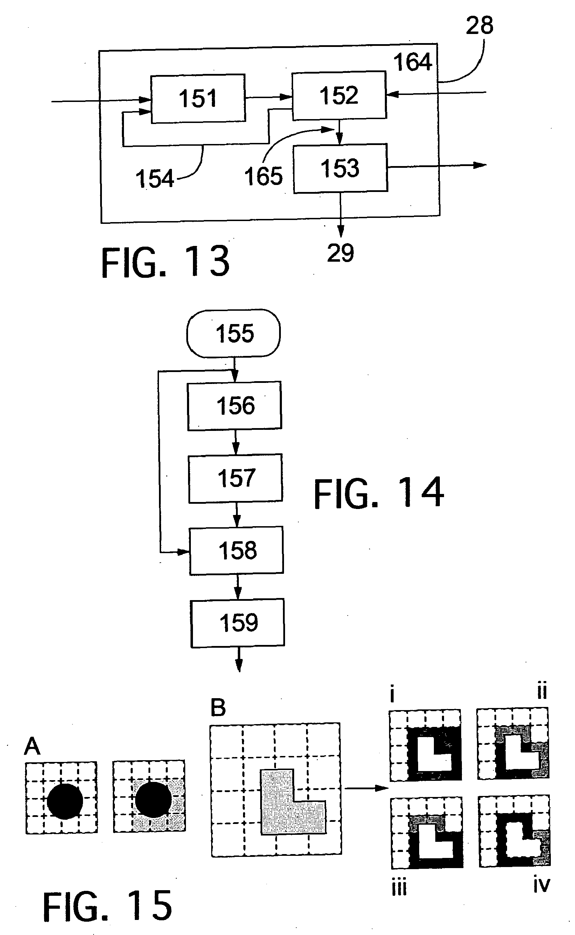

In figure 13, a further preferred embodiment of a practical example of the application module 28 is shown. In this embodiment, this module comprises the following parts:
- a layout module 151 that is arranged for describing incoming data 6, such as the XML page and style descriptions in a page description with matching state machines of which the features are suitable for use with the respective codec;
- a screen state module 152 for controlling the state of the screen and the state machines, in which the screen state module is responsive to incoming events, such as pressing of a key on a remote control 9, or e.g. time controlled events, in which the screen state module generates descriptions of image transitions;

- a scheduler for scheduling of the transitions of the screen state and generating of information for assembling of fragments and descriptions of fragments for e.g. providing a direction to applications for the fragment.

In figure 2, a flow chart is s shown of the working of the layout module 151. This layout module receives information from:
- the application front-end 4 by means of e.g. XML page descriptions and style descriptions (6),
- the screen state module 152 by means of updates of the screen states.

The layout module translate these in a number of steps to an abstract page description. These steps comprise the creation of page descriptions in XML and/or CSS for providing the result of a description of the screen in objects with a random shape.

In step 157, the objects of step 156 are mapped (transformed) and subsequently these objects of step 156 are placed in rectangles based on mpeg micro block boundaries. Examples hereof are shown in figure 1 5. The practi - cal execution and optimisation thereof are understandable by the person skilled in the art within the understanding of the present invention. Dependent on the shape and relation with one or more macro blocks, the objects can be fitted in many ways such that they will fit within frame work of the application of macro blocks or another format that can be applied in a codec for a video.

Observe the freely placed circle in figure 15A. On a macro block grid, this circle results in the given rectangle that is aligned to macro block boundaries. This is a rectangle that circumscribes the object (marked shown in the right representation of the circle).

In case the object is more complex, an approach that results in one or more rectangles may be chosen from the set several ways of approach. The choices of the strategy to be followed may amongst others be dependent of e.g.:
- the complexity of the object,
- the ratio of the surface of the object with respect to the circumscribing rectangle thereof;
- the function of the object on the screen,
- the availability of fragments in the cache of the stream assembling serve 103', etc.

In case of the object in figure 15B possible divisions are as follows:
i. a circumscribing rectangle on macro block boundaries, such as is used in figure 15A,
ii. a division in the three smallest rectangles on macro block boundaries,
iii. a division in the largest horizontally oriented rectangles on macro block boundaries,
iv. a division in the largest vertically oriented rectangles on macro block boundaries.

For determining of a circumscribing rectangle, such as the setting according to 15A and 15B i), the following algorithm may be used;
1. x-left = min(object-horizontal);
2. y-above = min(object-vertical);
3. x-right = max(object-horizontal);
4. y-below = max(object-vertical);
   setting = (floormb(x-left), floormb(y-above), ceilrr.b(x-right), ceilmb(y-below));
in which floormb and ceilmb are the in itself known mathematical functions floor and ceil, which are adjusted to round off on the macro block dimensions of the applied codec. In step 158 a solution is provided in case the rectangles that are generated in step (157) comprise an overlap. The step serves the purpose of solving any problems with respect to overlapping rectangles.

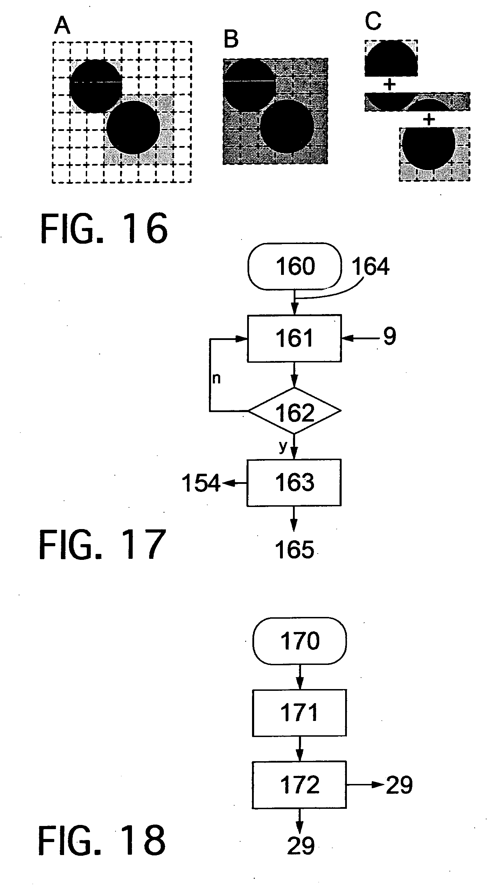

For explanatory purposes, figure 16 provides an example in which rectangles around two circles overlap A). B) and C) are two possible solutions for this conflict. In B) the two rectangles are combined into a circumscribing rectangle (in which the algorithm from step 157 may be applied), whereas in C) the approach for a horizontally oriented division is chosen. A number of different divisions may be applied, in which the choice for a certain division is dependent on e.g. the complexity of the overlap, the ratio of the surface of the individual rectangles with respect to the circumscribing rectangle, the availability of fragments in the cache of the fragment assembler, etc.

In step 159, the result of the previous step is an image with non overlapping rectangles. However, the rectangles on the supplied page rarely comprise the full screen. Therefore, a further step is required that completes the screens, in other words that fills up empty parts with e.g. non overlapping rectangles of e.g. a background. The result of these steps is that a text page description (XML + CSS) is transformed into an abstract page description that e.g. adheres to the following properties that the screen is subdivided into rectangles and/or that the rectangles do not overlap.

In figure 5, a flow chart is shown of the method steps that are performed by the state module 152. The method starts in step 160. In this step, it is waited for an event based on which the state of the screen is to change. In case the state changes, page updates are send to the layout module block and page changes are transmitted to the scheduler.

In step 161 the state is kept unchanged until an event takes place. Such events may be key presses on the remote control, but also other internal and external events, such as:
- Time dependent events (lapse of time, next frame time),
- Front-end generated events,
- Resource events, such as the availability of a 'resource' as an image or video stream or the ending of a resource.

In step 162, the state is maintained in case no event happens and the method continues in step 163 in case an event happens.

In step 163, the page state is adjusted in case an event was received. An update of the page is transmitted to the layout module and the changes to the scheduler.

Figure 8 shows a flow chart of the scheduler, the scheduler serves the purpose of sorting the page changes in step 171 into an order that is compatible to the codec. The descriptions that are provided are translate by the scheduler in fragment descriptions that can be transformed into codec fragments by the fragment encoder 22. However, not all codec fragments are compatible. In e.g. mpeg, the structure in the P and 3 frames determine whether fragments can be assembled in the same time period. Also it may occur that a certain transition (especially a texture effect) requires a certain pre and/or post condition. The scheduler determines such facts and provides a time line in relation to the desired page changes. The time line is processed in the assembly information that is send to the video assembler 24 in step 172.

The assembly information comprises furthermore references to the fragments that are provided to the fragment encoder by means of the fragment descriptions.

[pc03]The Application Server 4 provides the content for a TV GUI for content applications and maintains application session information. Based on user key presses 9 from a set-top box 3 with a remote control, TV screen updates for applications are sent to the Renderer. The Application Server hosts a variety of TV content applications using a flexible plug-in architecture. A TV content application comprises a GUI definition, which uses XML and CSS files for defining the application's visual interface on the TV screen, and logic to access the actual content from either a private network or the internet. Content is accessed through known (internet/intranet) back-end servers.

The Transcoding/VOD Server 182 provides transcoding and VOD play-out functionality. Most media in private or operator networks will not be MPEG-encoded or will otherwise not have uniform MPEG encoding characteristics. The Transcoding/VOD Server trans codes A/V formats (.wmv, .flv, etc.) to an MPEG stream with known characteristics.

The Transcoding/VOD Server makes transcoded MPEG streams available for play-out via the Renderer 2. Recently viewed content is cached for optimal play-out performance.

The Renderer 2 establishes the actual sessions with the set-top boxes. It receives screen updates for all sessions from the Application Server and sends the screen information as individual MPEG streams to each set-top box. Innovative algorithms make it possible to serve many set-top boxes from a single Renderer, which makes the platform highly scalable.

Key pressed 9 received from the user via the return channel are forwarded to the Application Server, which implements the application logic for the session.

The three components and their main interfaces are depicted in figure 18. The components may be co-located on a single server machine or distributed in the network. Internal interfaces between the three components, such as screen updates and keys, as well as the components themselves are designed to support both local and networked modes of operation.

In this embodiment, there are three interfaces to the platform according to the invention: the back-end interface, the STB interfaces, and the management interface.

The Application Server 4 and the Transcoding/VOD Server 182 components both may have a back-end interface to the internet or a private operator intranet. The Application Server may host TV application plug-ins for each content application. These plug-ins may use known mechanisms to access web content as are commonly used for backend integration for websites, i.e. REST/SOAP and XML web services. Thus, this is a HTTP interface to desired content providers.

The Transcoding/VOD Server 182 gets VOD requests from the Renderer (via the Application Server) when the user at the STB selects a particular media stream. For this purpose, the Transcoding/VOD Server has a HTTP/MMS interface to access the media portals of desired content providers.

The interface of a system according to the present invention to the set-top box typically runs over cable operator or IPTV infrastructures. This interface logically comprises a data communications channel for sending MPEG streams from the Tenderer to each individual set-top box and a control return channel for the remote control keys pressed by the user. The MPEG data channel can be implemented using plain UDP, RTP, or HTTP protocols. The control channel for keys can be implemented using RTSP, HTTP POST, or Intel's XRT.

A further interface to the platform according to the present invention is a management interface. Configuration and statistics of the platform are made available using this interface. The management interface is implemented using a combination of HTTP/XML, SNMP, configuration and log files.

Digital media, video and audio, come in a variety of different formats. Not only codecs vary, but so do container formats. To be able to serve a uniform MPEG streaming interface to the Set-Top Box, with uniform encoding characteristics as well, most of the media available on the internet or in operator networks needs to be transcoded.

This is what a Transcoding Server according to the present invention does. It downloads media content from a network server and transcodes from its native format to an MPEG-2 Program Stream (VOB-format) with known encoding characteristics. The resulting MPEG-2 media content is made available for play out to Set-Top Boxes and is cached locally to satisfy future requests for the same content very fast.

The Transcoding server is a distinct component in the embodiment. The system architecture is depicted in figure 18. When the user selects a video for playing, the Application server re-writes the URL to point to the Transcoding Server 182 with the selected URL. The Renderer first retrieves the information file 191 from the Transcoding Server and subsequently transcoded chunks 192 of the selected media file. It integrates the video stream into the G1PEG stream to the STB (full-screen or partialscreen as part of the GUI).

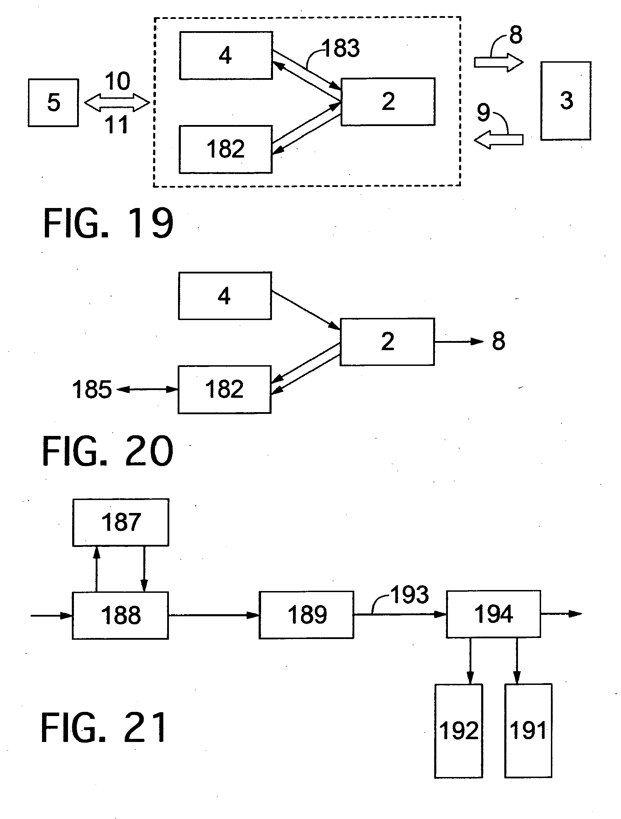

The transcoding process is depicted in figure 20. It is given a URL as input. This URL may be pointing to a media resource directly or it may point to a container format file, such as ASX. First, the Link Checker 187 is consulted to parse the container format, if necessary, and to return links to the actual medina files. The media files are retrieved one by one by the Content Retriever (using HTTP or MMS, depending on what the link indicates) and transcoded on-the-fly by the Transcoder to an MPEG-2 Program Stream (VOB-format).

The VOB stream 193 is fed into the Indexer. The Indexer partitions the stream in 8 MB chunks and writes these to disk as part of the cache. It also generates an index file while partitioning, indicating sequence header offsets for each stream in the VOB. The index file 191 is saved with the VOB chunks 192. When a configurable amount of disk space is exceeded, the Transcoder uses e.g. a Least Recently Used (LRU) algorithm to remove old media from the cache.

The output of the process further comprises of a information file and XML program data. The parts file indicates where parts for this stream can be found (typically on the HTTP server that the Transcoder runs on). The program XML is returned as output of the process and contains links to parts files, e.g. to support multiple clips in an ASX. The speed of the transcoding process (and thereby its resource consumption) is matched to the required frame rate. When multiple transcoding sessions exceed a configurable resource threshold, the Transcoder returns a Service Unavailable error.

For every MPEG-2 VOB stream that it generates, the Transcoding server generates an index file as well as well as a parts file. The index file is an XML description of the information in the IPEG-2 stream. For all the available video streams in the VOB, it indicates for each MPEG Sequence Header at which offset and in which (8M) chunk it can be found, and to which frame number it relates. With the information in the index file, the client can seamlessly switch between streams available in the VOB file. This can also be used for trick-mode support.

The index file format is exemplary as follows:
<headers>
<sequence stream="e0" offset="0x3d" frame="L" />
<sequence stream="e1" offset="0x1025" frame="1" />
<sequence stream="e2" offset="0x1825" frame="1" />
<sequence stream="e1" offset="Cx5cd2c" frame="13" />
stream="e0" offset="0x6ff74" frame="13" />
<sequencestream="e0"offset="0x6ff74" frame="13" />
<sequence stream="e2" offset="0x9ac83" frame="13" />
<sequence stream="e1" offset="0xacc82" frame= "25" />
<sequencestream="e0" offset="0xb87b8" frame="25" />
<sequence stream="e2" offset="Cxbbale" frame="25" />
...
</headers>

The information file is a high-level XML description of stream parameters and indicates the URL where parts (i.e. 8,MBchunks) of the transcoded stream and the index file can be found on the web server. If the 'multi' keyword is set to true, the %d in the part name indicates that the parts are numbered sequentially starting from 0. The client should get parts and increment %d until an HTTP 404 Not Found is encountered. This way the information file is available immediately, even though the length of the content is not known yet.

The information file format is exemplary as follows:
<part url="http://ka/vocache/413ddd63/418ddd63_%d.vcb" size="83886C8" multi="true" type="vob"/>
<index url="http://kafka/vodcache/418ddd63/418ddd63.idx" reload="true"/>
<streax id="e0" width="352" heigh="288" rate="25.000000"/>
<streax id="c0" rate="48.000000/>
<stream id="el" width="176" height="144" rate="25.000000"/>
<stream id="e2" width="720" height="576" rate="5.000000"/>
<headers>
<sequence stream="e0" offset="0x3d" frame="1" />
<Sequence stream="e1" offset="2025" frame="1" />
<sequence stream="e2" offset="0x2825" frame="1" />
<sequence stream="e1" offset="0x56d2c" frame="23" />
<sequence stream="e0" offset="0x6ff74" frame="23" />
<sequence stream="e2" offset="0x9ac83" frame="23" />
<sequence stream="el" offset="0xaccB2" frame="25" />
<sequence stream="e0" offset="0xb87b8" frame="25" />
<sequence stream="e2" offset="0xbbale" frame="25" />
...
<headers>

The output of the transcoder process is e.g. XML program data. If the URL to be transcoded points to a container file format such as ASXthe individual items of the ASX are treated as individual parts, so that, for other ASX files, the same parts can be reused in a different order, thereby maintaining the benefits of caching. This is particularly useful, for example, when advertising clips are inserted into e.g. ASX files dynamically.

The XML program data therefore just indicates the order of the parts and points to parts files for further information: it effectively indicates the 'clips' in a 'program'. The XML program data format is as follows:
<program>
<clip>http://kafka/vocache/e007f84/e007f84.xml</clip> # points to parts file
<clip>http://kafka/vodcache/7e782dd2/7e82dd1.xml</clip>
<clip>http://kafka/vodcache/48ddd63/418ddd63.xml</clip>
</program>

The Transcoding server can simultaneously encode the stream into three different formats: full screen, partial screen, and thumbnail (for PAL, this is: 720x576, 352x288, 176x144). These three video formats are mixed into one single MPEG-2/VOB stream, together with a single MPEG-1 Layer 2 audio stream. The Renderer can Display any of the formats at any given moment. The index file enables seamless switching between streams.

The Transcoding Server maintains the aspect ratio (width/height, typically 4:3 or 16:9) of the source material when transcoding to MPEG-2. It uses top/bottom (letterbox) or left/right padding where necessary. Pixel aspect ratio is taken from the information in headers of the source material.

Trick-mode support is implemented by the following interaction between the components. When a video has started playing, the Renderer receives commands from the user (e.g., via the XRT protocol) from the STB (2). For the trick-mode situation, such user keys may comprise a particular trick-mode button selection on the screen (Pause/REW/FF buttons) or a specific trick mode key from the remote control.

For both cases, keys are first forwarded to the Application Server 3. Based on the key value, the Application Server sends a trick-mode command to the Renderer (4) (and possibly a screen update with e.g. a time indicator or progress bar). The Renderer then acts on the trick-mode commands.

For FF/REW commands, the Renderer will consult the index file and start playing from a different location in the VOB stream. The Renderer will retrieve a different chunk from the Transcoding Server if necessary (5, 6).

The transcoder maintains a disk-cache of its output. The 8M chunks, index file and information file are saved in one separate directory per media resource. When a request is made to transcode a URL that has been transcoded before and when it is available in the cache, the transcoder immediately returns the cached parts file. The 8M media chunks and the index file are also kept in the cache, but these are served independently of the transcoder process, since the URLs for media chunks are listed in the information file and the client requests these URLs directly from the web server.

The fixed-size chunks improve disk sector allocation and seeking time. When a configurable limit of disk space is reached, the transcoder will start to delete media that has least recently been used (LRU algorithm). To be able to maintain LRU statistics at the transcoder, the information file that is served is marked as non-cacheable, so that it needs to be retrieved by clients each time it is used

Using known Internet proxy and cache servers such as Squid, hierarchical caching becomes possible automatically. Since the VOB file is partitioned in manageable chunks, which are all marked as cacheable, intermediate caches will cache the 8M chunks on the way to the client, making these chunks available to other clients using the same cache. Default Squid configurations need to change their maximum_object size to > 8M and increase default cache size for optimal performance, but little extra configuration is necessary. Caching systems with large amounts of memory may enable memory-based intermediate caching to optimize speed even more.

Hierarchical caching is depicted in figure 4. The index file is preferably available from the transcoder directly, while the transcoded VOB chunks may reside anywhere in intermediate operator caches. The VOB chunks also remain available on the transcoding server. When VOB chunks are deleted because of LRU and ageing, all VOB chunks and the corresponding index file are deleted on the transcoding server, and the transcending process will run again when the media is requested the next time.

### Channel capacity

It is known that playback of audio data is preferably performed in an accurately timed manner as the sense of hearing of men is highly sensitive for time deviations. The visual sense is a lot less sensitive and in other words is much better capable of correcting deviations or delays of video pictures. The present embodiment is aimed at providing solutions in which such sensitivities are taken into account during playback.

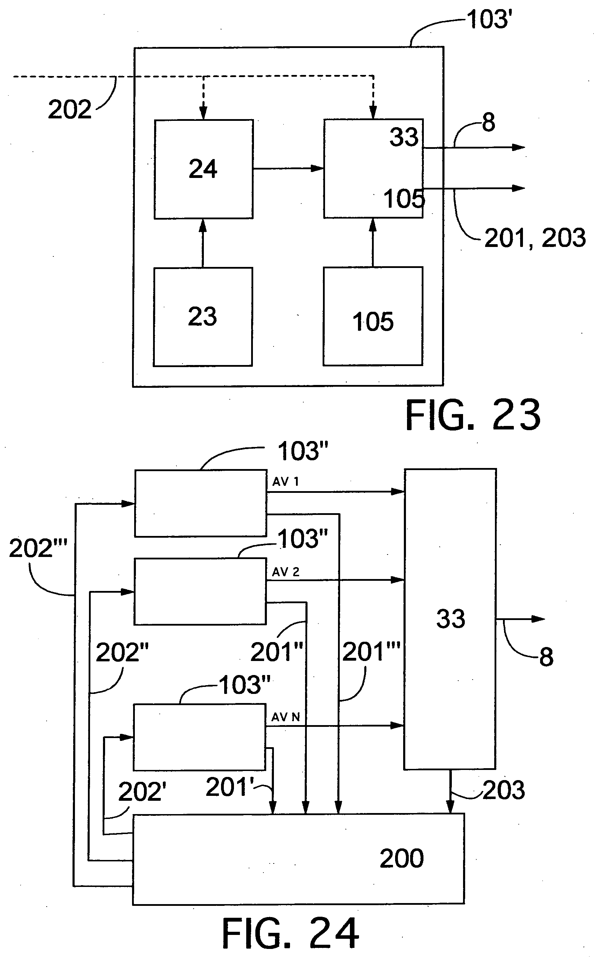

In a further embodiment (figure 23) that is applicable in specific situations, a number of sessions of the video stream composing server 103' share a transport channel to the clients. To such sessions is being referred as session 1 .... session N in figure 24.

During the performing of the method and system according to this embodiment, the capacity of this channel may be insufficient for the number of sessions that are assigned to the channel. This may e.g. happen when several sessions transport relatively large amounts of picture refresh data simultaneously towards the clients, or when e.g. the channel is under dimensioned with respect to the maximum capacity that is needed for such periods of transport of picture refreshers.

This may e.g. occur when the AV-streams of the sessions are embedded in an Mpeg transport stream that is being transmitted via a channel with a fixed capacity, such as e.g. a QAM-RF network in a DVB-environment .

In case of mpeg coding, it is in itself known to apply a bit allocations strategy, e.g. when several parallel sessions are each provided by means of a known mpeg encoder in which each stream is coded into mpeg in a life manner. In such a case, the most important control parameter of the encoder, the 'quant' parameter that enables an exchange between audio visual quality and channel capacity. This control parameter (the quant) is according to the present invention preferably not applied as all fragments are preferably created in the fragment encoder 22, 102' with a quant that is determined in advance. Besides the fact that the stream composer 103'is not an mpeg encoder and does not encode data into mpeg, the use of a quant is therefore not available in the server 103' that composes streams, because all fragments are already coded in the fragment encoder 22,102'.

In the embodiment. (not shown) in which each fragment is encoded with different quant values, such fragments require a relatively high computing capacity at the fragment encoder, a relative high capacity with respect to network bandwidth for the connection between the renderer and the stream composing server 103' and a relatively large storage capacity in the cache 23 of the stream composing server 103'.

### Session ratio control

A proposed solution for enabling such a bandwidth is aimed at assigning parts of the channel capacity to each of the sessions in such a manner that the channel capacity is not exceeded, and the audio visual quality of the sessions on the clients is being reduced in as little as possible and as gracious as possible.

### Methods

Furthermore the methods for reducing the number of bits per session comprise: partially excluding a session from playback by means of preventing of transport (skip or drop) of audio and/or video fragments, and the delay of audio and/or video fragments until sufficient channel capacity is available for transmitting these.

### Frame skip-drop method

In the embodiment of dropping of playback of a video fragment, only the frames that are not depended of a left out frame can be shown. In case such a dependency is present when a video frame is left out, and interframes follow, the resulting visual state of a fragment may not be rendered. According to this embodiment, the solution is to provide for an extra intra frame that is preferably composed when the reference frames in between are left out by limitations of the channel capacity.

### Method of delay

The video fragments that reach the AV assembler are assignable to preferably one of two classes. The first class comprises fragments that are to be played back with audio data that preferably is synchronised with this audio data. The second class comprises fragments that may be shown without audio data. The first class (real time class, RT) comprises e.g. movie clips and the second class (non-RT) comprises e.g. navigational elements of a user interface. For fragments that are not in the RT class, the timing is not critical and these may be delayed. This results in a perceived slower reaction time of the total system that is perceived by the user as substantially a somewhat higher latency of the system. Alternatively, even in case of RT data, it is possible to adjust the image quality of the video data to the bandwidth, while the timing of the audio and video data is being kept within acceptable perceiving parameters of the user.

As is shown in figure 23, an embodiment of the stream composing server 103', comprises means for composing the capacity requirement data 201 for indicating the amount of bandwidth and/or computing power that is required for this session.

### Bit allocation

For each user session, a logical unit 103" of the stream composing server is functionally comprised in the server 103' that is analogous to the server 103. The functional components of each stream composing server 103 are similar to those within the analogous server 103 of figure 10 in the above. Batch logical stream composing server 103" provides information 201, 201', 201", 201'" with respect to the capacity or bit requirements of the respective sessions. This information of each session is processed in the bit allocation module 200. This module is preferably incorporated in the server 103' or 103, e.g. by means of an additional software module or process.

The channel multiplexer 33 transports the channel data 203 with respect to the available capacity of the channel for transporting the image and audio data (e.g. mpeg stream) towards the bit allocation module 200. Based on the information that is provided with the channel data 203 and the channel requirement information 201 , the bit allocation module computes or creates ratio control data 202, 202', 202", 202'" for input thereof to the respective composers 103" .

Preferably, the bit allocation means also determine which fragments of which sessions need to be dropped, delayed or composed in a regular manor. For this purpose, preferably use is made of information such as the information that is comprised in the composing information 129 with respect to the fragments that were originally assembled by the application logic, based on which the determination of the information with respect to the least loss of user experience is made.

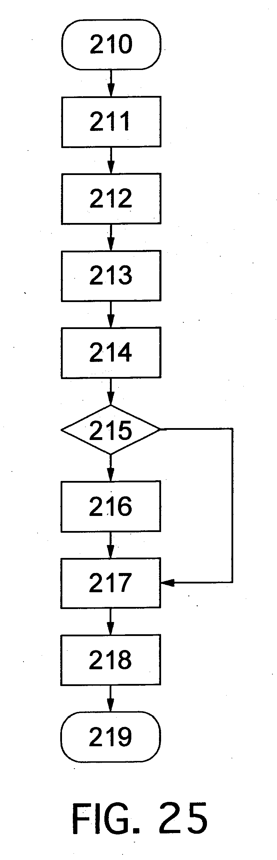

An example for obtaining such is that the following process is being performed for one or each frame interval, as is shown in figure 25. In step 211, the capacity information 201 is provided to the bit allocation block for a session. These data may comprise: min. number of bits required, RT bits required and non RT bits required. In step 212, the channel capacity data is provided to the bit allocation block. The bit allocation block performs the following calculations based on the information for the purpose of determining which sessions will be performed without interference and which sessions will be performed with delayed fragments or with dropped fragments and/or with additional reference frames (inter frames) .

In step 213, based on data with respect to the channel capacity, a check is being performed on all sessions for determining which capacity is required. In step 214, for each session, capacity is reserved for the RT fragments of the sessions until the RT fragments are assigned or until the capacity is filled. In step 215, it is determined whether all RT data is assigned. In case all RT data is assigned, the process continues in step 216 with assigning all the non RT data to the channels until all data of all sessions are assigned or until the channel capacity is filled. In case not all RT data is assigned in step 214, the method continues in step 217.

In step 217 the non assigned data is delayed, or it is determined that such data is to be dropped, in such a way that the dropped data will not be shown on the screen of the end user. It is possible that the end user has provided instructions by means of his remote control, that the session needs to be refreshed or may be dropped entirely.

In step 218, the resulting stream control data 202 is transferred to the respective stream composers 103" based on such control data, the stream composers adjust the resulting streams in order to adhere to the control data by means of e.g. dropping of fragments or delaying of fragments. The method is ended in step 219.

It is to be emphasized that the fragments are generally intended for providing just a part of the full 1 image and that especially non RT fragments are generally non essential for obtaining the desired user experience. The delaying of the transmittal of such fragments a fraction of a second after the fragments were meant to be shown by the application, based on the application data, will in a large number of instances not be noticeable by a user or the user will experience a minor latency which is to be expected in user environments that are based on networks. Therefore, this embodiment will provide for a robust user experience while also a solution at low cost is provided for enabling a large number of parallel sessions in a network environment while use is made of very simple clients.

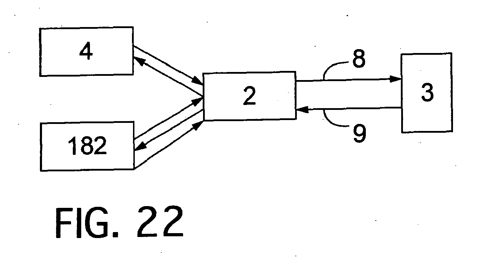

The method of figure 25 is substantially not intended to be influenced by end user instructions, as this method has been intended for adjusting of the transport of the video data based on short time intervals, such as a time interval of several seconds, preferably several frames. The system and the method according to the present embodiments that are described under reference to the figures 1-25 are not intended to be limiting for the invention. Other arrangements are possible within the understanding of the present invention in order to obtain the goals for limiting of the bandwidth or computing power for obtaining a relatively large number of streams within limited infra structure parameters.

In the above, the present invention is described in the forgoing on the basis of several preferred embodiments. Different aspects of different embodiments are deemed as described in combination with each other, wherein all combination which can be made by a skilled person on the bases of this document should be included. These preferred embodiments are not limitative for the scope of protection of this text. The rights sought are defined in the appended claims.

It follows a list of further embodiments of the invention:
Embodiment 1. Method for streaming of parallel user sessions (sessions) of at least one server to at least one client device of a number of client devices for representation of the sessions on a monitor that is connectable to a client device, in which the sessions comprise video data and optional additional data, such as audio data, in which the method comprises steps for:
   - defining coded fragments, based on reusable image data, in which the encoded fragments are suitable for assembling of the video data in a pre defined data format, such as a video standard or a video codec, and in which the encoded fragments are suitable for application in one or more images and/or one or more sessions,
   - assembling of a data stream per session, comprising video data in which the encoded fragments are applied.
Embodiment 2. Method according to the features of embodiment 1, comprising steps for applying a number of codec slices that may be arrange able in a frame and/or mutually independent codec slices depending on picture objects of the user inter face that is to be shown in defining the encoded fragments.
Embodiment 3. Method according to one or more of the preceding features of embodiments, comprising steps for providing a reference of an encoded fragment to pixels of a reference image buffer in a decoder, even when the pixels in this buffer are not set based on this coded fragment.
Embodiment 4. Method according to one or more of the preceding features of embodiments, comprising steps for combining of codec slices or coded fragments in order to perform sequential processing on pixels in reference buffers in a way that is in accordance with the standard of the data format.
Embodiment 5. Method according to one or more of the preceding features of embodiments, comprising steps for temporarily storing image fragments in a quickly accessible memory.
Embodiment 6. Method according to one or more of the preceding features of embodiments, comprising steps for accessing from the quickly accessible memory of the temporary stored image fragments and/or slices.
Embodiment 7. Method according to one or more of the preceding features of embodiments, comprising steps for adding a tag to the coded fragments .
Embodiment 8. Method according to the features of embodiment 7, comprising steps for retrieving encoded fragments, based on the tag.
Embodiment 9. Method according to one or more of the preceding features of embodiments, comprising steps for creating texture mapping data for application thereof in coded fragments.
Embodiment 10. Method according to one or more of the preceding features of embodiments, comprising steps for the use of data referring to the shape and/or dimensions of the slices in the steps for defining the encoded fragments.
Embodiment 11. Method according to one or more of the preceding features of embodiments, in which the steps for assembling of the data stream comprise steps for reuse of media assets, such as text, images, video and/or audio.
Embodiment 12. Method according to one or more of the preceding features of embodiments, comprising steps for sending of fill up frames or for not sending image information.
Embodiment 13. Method for streaming of parallel user sessions (sessions) of at least one server to at least one client device of a plural of client devices, for representation of the sessions on a display device that is connected to the client device, in which the sessions comprise video data and optionally additional data, such as audio data, in which the method comprises the steps for:
   - defining of coded fragments based on reusable image information by an application fragment creation server, in which the encoded fragments are suitable for composing of video data in a pre determined data format, such as a video standard or a video codec and in which the encoded fragments are suitable for application in one or more pictures and/or one or more sessions, transmitting of the encoded fragments for reception by a video stream composing server by the application fragment creation server.
Embodiment 14. Method for streaming of parallel user sessions (sessions) from at least one server to at least one client device of a number of client devices for representing of the sessions on a display device that is connectable to the client device, in which the sessions comprise video data and optionally additional data, such as audio data, and in which the encoded fragments are suitable for composing the video data in a predetermined data format, such as a video standard or a video codec, and in which the coded fragments are suitable for application in one or more pictures and/or one or more sessions, in which the method comprises steps for:
   - receiving of encoded fragments from an application fragment creation server by a video stream composer server;
   - processing and/or scoring into a local memory for later application of the fragments;
   - assembling of a data stream comprising video data making use of the coded fragments per session.
Embodiment 15. Method according to the features of embodiment 13 or 14, comprising steps according to one or more of the features of embodiments 1-12.
Embodiment 16. Method according to one or more of the preceding features of embodiments, comprising steps for retrieving fragments from an application fragment creation server by the video stream composing server.
Embodiment 17. Method according to one or more of the preceding features of embodiments, comprising steps for creating assembly information for assembling a video stream based on the information with application of a number of fragments.
Embodiment 18. System for streaming of a number of parallel user sessions (sessions) of at least one server to at least one client device of a number of client devices for displaying of the sessions on a display device that is connectable to the client device, in which the sessions comprise video data and optional additional data such as audio data, the system comprising:
   - at least a server for:
   - coding of reusable image data to encoded fragments ,
   - assembling of video streams comprising at least one encoded fragment,
   - receiving means for receiving at least user instructions,
   - transmitting means for transmitting of video streams in a predefined data format, such as mpeg or H.264, towards the client devices.
Embodiment 19. System according to the features of embodiment 18, comprising a quickly accessible memory, such as a cache memory, for temporary storage of the encoded fragments.
Embodiment 20. System according to the features of embodiment 18 or 19, comprising means for transforming and/or multiplexing of data streams for transmission thereof to the client devices.
Embodiment 21. System according to one or more of the features of embodiments 18-20 comprising an application server comprising the receiving means, in which the application server is arranged for modifying of a server application and/or a user application for representation via the client device.
Embodiment 22. System according to the features of embodiment 18 comprising means for exchanging data with respect to the contents of the quickly accessible memory and the application server.
Embodiment 23. Method for rendering objects of any shape after mapping thereof to macro blocks.
Embodiment 24. Method according to the features of embodiment 23 comprising one or more steps as described in this text.
Embodiment 25. Method for rendering of video streams, comprising steps for:
   - the transformation of a video stream into a predefined codec,
   - the formation of a structured data file with respect to the video stream, and
   - based on the information in the structured data file rendering of the video stream.
Embodiment 26. Method according to the features of embodiment 25 comprising one or more steps as described in this text.
Embodiment 27. Method for rendering of video streams by means of a system or a method according to one or more of the preceding features of embodiments, comprising steps of:
   - forming of bit requirements for a session,
   - determine which fragments of which sessions are to be processed,
   - providing an authorisation signal for a data stream for the session.
Embodiment 28. Method according to the features of embodiment 27 comprising steps for making a distinction between fragments that are preferably rendered in real time and fragments that may be rendered non real time without quality loss other than delay.
Embodiment 29. Method according to the features of embodiment 27 or 28 comprising steps for making a distinction between fragments that are connectable to audio data and fragments that are not connectable to audio data.
Embodiment 30. Method according to one or more of the features of embodiments 27-29 comprising steps for skipping of one or more of the fragments .
Embodiment 31. Method according no one or more of the features of embodiments 27-30 comprising steps for delaying one or more of the fragments .
Embodiment 32. Method according to one or more of the features of embodiments 27-31 comprising steps for providing of additional intra frames.
Embodiment 33. Method according to one or more of the features of embodiments 27-32 comprising steps for coding of the fragments with each an individual quant value.
Embodiment 34. System according to one or more of the features of embodiments 18-22 for performing of a method according to one or more of the features of embodiments 1-17 and/or 27-33.
Embodiment 35. Computer program product for performing a method according to one or more of the preceding features of embodiments and/or for use in a system according to one or more of the preceding features of embodiments.

## Claims

1. A method for providing media content to a requesting client device through a renderer (2)that integrates the media content with encoded fragments to define an encoded stream (8) for transmission to the client (3), the method comprising:
downloading and transcoding media content associated with an application in a transcoding server (182) into a protocol format having known characteristics decodable by the client device (3)
receiving a request (9) from the client device (3) for specific media content associated with the application
integrating the specific transcoded media content with encoded fragments to define an encoded media stream in a renderer (2); and
transmitting the encoded video stream to the client device (3).

2. The method according to claim 1, further comprising:
receiving an instruction from the client device (3) for an application at application logic (28).

3. The method according to claim 1, wherein the media content includes full motion video.

4. A method according to claim 1 wherein the protocol format is MPEG.

5. A method according to claim 1, wherein the protocol format is VC1.

6. A method according to claim 1, wherein the protocol format is H.264.

7. A method according claim 3 wherein the encoded video stream is an MPEG-2 stream.

8. A method according to any of the preceding claims wherein the media content is requested by a content retrieving server (4) from a networked server (5).

9. A method according to any of the previous claims further comprising:
saving the transcoded media content to an addressable location.

10. A method according to claim 7 wherein the addressable location is associated with the transcoding server (182).

11. A method according to any of the preceding claims wherein the transcoding server can transcode the media content into one of a plurality of formats including full, partial screen, and thumbnail representations.

12. A method according to any of the preceding claims further comprising:
indexing the media content during the process of transcoding;
receiving a user command to pause, rewind, or fast forward the media content at the renderer (2); and
selecting an indexed portion of the transcoded media content for integrating the indexed portion of the transcoded media content with encoded fragments to define the encoded video stream.

13. A system implementing any of the preceding method claims.

14. A computer program product according to any of the preceding method claims.
